(19) Europäisches Patentamt

European Patent Office

Office européen des brevets

(11) Veröffentlichungsnummer: **0 222 125**
**A1**

# (12) EUROPÄISCHE PATENTANMELDUNG

(21) Anmeldenummer: 86113331.2

(22) Anmeldetag: 27.09.86

(51) Int. Cl.⁴: **C08G 8/04** , **C08G 8/28** , **C08G 16/02** , **C08G 16/04** , **H01B 1/12**

(30) Priorität: 10.10.85 DE 3536115

(43) Veröffentlichungstag der Anmeldung:
20.05.87 Patentblatt 87/21

(84) Benannte Vertragsstaaten:
**BE DE FR GB**

(71) Anmelder: **BROWN, BOVERI & CIE Aktiengesellschaft Kallstadter Strasse 1 D-6800 Mannheim 31(DE)**

(72) Erfinder: **Weddigen, Gert, Dr. Dipl.-Chem. Max-Reger-Strasse 25 D-6900 Heidelberg(DE)**
Erfinder: **Holzer, Herbert, Dr. Dipl.-Chem. Wingertsweg 15 D-6114 Grossumstadt(DE)**
Erfinder: **Schneider, Hartmut Eisenbahnstrasse 15 D-6831 Plankstadt(DE)**
Erfinder: **Elsässer, Gundolf Schulstrasse 38 D-69004 Eppelheim(DE)**

(74) Vertreter: **Kempe, Wolfgang, Dr. et al c/o BROWN, BOVERI & CIE AG ZPT Postfach 351 D-6800 Mannheim 31(DE)**

(54) **Verfahren zur Herstellung eines Polymers.**

(57) Die Erfindung bezieht sich auf ein Verfahren zur Herstellung eines Polymers mit Triaromatmethaneinheiten als Grundbausteine, dessen spezifische elektrische Leitfähigkeit durch die Bildung von Charge-Transfer-Komplexen erzielt wird. Erfindungsgemäß wird dem Polymer Schwefel beigemischt, in dem es hierin bei 150°C gelöst wird. Als Dotierungsmittel wird Schwefelsäure als Elektronenakzeptor verwendet. Der Schwefel kann nach der Dotierung im Vakuum wieder auf einfache Weise entfernt werden.

## Verfahren zur Herstellung eines Polymers

Die Erfindung bezieht sich auf ein Verfahren zur Herstellung eines Polymers gemäß dem Oberbegriff des Patentanspruches 1.

Solche Polymere sind zur Herstellung von Gehäusen und Schutzüberzügen von elektrischen Geräten sowie zur Beschichtung von Verkleidungselementen für Wände und Möbel geeignet.

In der Elektrotechnik besteht ein großer Bedarf an Polymeren, deren spezifische elektrische Leitfähigkeit bezogen auf den Querschnitt der Kunstharzmasse innerhalb eines Bereiches, in dem die Kunstharzmasse noch als Isolator wirkt, zwischen $10^{-14}$ und $10^{-7}$ (Ohm x cm)$^{-1}$ frei gewählt werden kann. Hierdurch ist es möglich, noch eine ausreichende Isolierwirkung aufrecht zu erhalten, und gleichzeitig statische Aufladungen zu vermeiden. Diese Polymere können sowohl als antistatische Oberflächenbeschichtung verwendet werden, als auch zur Isolierung zwischen metallischen Flächen unterschiedlichen Potentials dienen. Im letzteren Fall ist die Volumenleit fähigkeit groß genug, um elektrische Überschläge auf der Oberfläche zu vermeiden, welche durch leitfähige Verschmutzungen hervorgerufen werden.

Aus der DE-OS 32 48 008 ist ein elektrisch leitendes, synthetisches Polymer bekannt. Es handelt sich um ein Polymer dessen Grundbausteine aus Triaromatmethaneinheiten aufgebaut sind. Die elektrische Leitfähigkeit des Polymers wird durch die Bildung von Charge-Transfer-Komplexen erzielt.

Polymere dieser Art weisen ohne Zusatze eine elektrische Volumenleitfähigkeit von $10^{-15}$ bis $10^{-18}$ (Ohm x cm)$^{-1}$ auf. Um diese Polymere sinnvoll zur Herstellung von Gehäusen und Überzügen von elektrischen Geräten verwenden zu können, sollten sie eine elektrische Volumenleitfähigkeit aufweisen, die wenigstens zwischen $10^{-7}$ und $10^{-14}$ (Ohm x cm) $^{-1}$ gewählt werden kann.

Die Bildung von Charge-Transfer-Komplexen in einem Polymer, dessen Grundbausteine aus Triaromatmethaneinheiten gebildet werden, erfolgt durch die Zugabe von Elektronenakzeptoren vor oder nach der Herstellung des Polymers. Zur Bildung von Charge-Transfer-Komplexen kommt es in diesem Polymer ebenfalls, wenn bei der Herstellung den Ausgangsstoffen, die das Polymer bilden, Elektronendonatoren zugesetzt werden. Die Zugabe von Elektronenakzeptoren und Elektronendonatoren zu dem Basismaterial des Polymers trägt ebenfalls zur Bildung von Charge-Transfer-Komplexen bei.

Elektronenakzeptoren sind z.B. Stoffe, die von anderen Molekülen oder Atomen Elektronen besonders leicht aufnehmen können. Bei Elektronendonatoren handelt es sich um Stoffe, die Elektronen besonders leicht an andere Atome oder Moleküle abgeben können.

Bei einem Polymer, dessen Grundbausteine aus Triaromatmethaneinheiten bestehen, handelt es sich um einen neutralen Stoff. Wird das Polymer in kleinen Volumeneinheiten betrachtet, so treten hierin an manchen Stellen sowohl funktionelle Gruppen mit einer besonders hohen Elektronendichte und an anderen Stellen solche Gruppen mit geringer Elektronendichte auf. Zu den Gruppen mit hoher Elektronendichte gehören Kohlenstoffdoppelbindungen, Kohlenstoffdreifachbindungen, NH-Gruppen, CN-Dreifachbindungen, Kohlenstoffbindungen in Aromaten und Heterocyclen sowie CN-Bindungen in Heterocyclen, OH-Gruppen, SH-Gruppen, Äther-und Thioäthergruppen, Jod, Stickstoff, Einfach-oder Mehrfachbindungen und schließlich Sauerstoff-und Schwefelbindungen. Zu den Gruppen, die in einer solchen polymeren, organischen Verbindung eine geringe Elektronendichte bzw. Elektronenmangel haben, gehören Kohlenstoffdoppelbindungen, die in ihrer beider Nachbarschaft folgende elektronenabziehenden Gruppierungen aufweisen, wie beispielsweise Halogen-Gruppen, Pseudohalogen-Gruppen, Carbonyl-Gruppen, Nitro-Gruppen, OH-Gruppen, SH-Gruppen, CS-Gruppen. Ferner gehört hierzu der Schwefel in Sulfoniumsalzbindungen, der Sauerstoff in Oxoniumsalzbindungen und der Stickstoff in Amoniumsalzbindungen.

Die Volumenleitfähigkeit des Polymers mit Triaromatmethaneinheiten wird dadurch erhöht, daß analog zur Bildung von Charge-Transfer-Komplexen die mit Elektronenunterschuß ausgestatteten funktionellen Gruppen des Polymers mit zugesetzten Elektronendonatormolekülen umgesetzt werden. Ebenso ist es möglich, die mit Elektronenüberschuß ausgestatteten funktionellen Gruppen des Polymers mit Elektronenakzeptormolekülen umzusetzen. Im Polymer entstehen dann Charge-Transfer-Komplexe, deren Donator-und/oder Akzeptoranteil jeweils ein Bestandteil des Polymers ist. Analog zu der Zahl der so integrierten Charge-Transfer-Komplexe entstehen in dem Polymer frei bewegliche Elektronen. Bei einer Konzentrationserhöhung des Zusatzes, insbesondere der Zugabe von Elektronenakzeptoren und/oder Elektronendonatoren erhöht sich die Zahl der integrierten Charge-Transfer-Komplexe, falls das Polymer noch über geeignete nicht abreagierte funktionelle Gruppen verfügt. Dabei erhöht sich auch die Zahl der frei beweglichen Elektronen und somit die Volumenleitfähigkeit in Abhängigkeit von der Konzentration des bzw. der beigemischten Zusätze.

Durch die Zugabe von Schwefelsäure als Elektronenakzeptor ist es möglich, eine spezifische elektrische Leitfähigkeit im Bereich von $10^{-5}$ (Ohm x cm)$^{-1}$ zu erzielen. Hierbei ist es jedoch erforderlich, daß mit einem Überschuß an Schwefelsäure gearbeitet wird, damit alle Anteile der zu dotierenden Polymermenge von der Schwefelsäure benetzt und gleichmäßig dotiert werden können. Auf diese Weise erfüllt die Schwefelsäure zwei Funktionen, nämlich die des Dotierungsmittels und des Lösungs-bzw. des Dispergierungsmittels. Die Verwendung von Schwefelsäure weist einen großen Nachteil auf, und zwar deshalb, weil die überschüssige Schwefelsäure nach dem Dotieren naßchemisch von dem dotierten Polymer abgetrennt werden muß. Im Zusammenhang mit einer naßchemischen Reinigung treten aber weitere Nachteile auf, die beispielsweise durch Umweltbelastungen und hohe Folgekosten bedingt sind.

Der Erfindung liegt deshalb die Aufgabe zugrunde, das Dotierungsverfahren zur Leitfähigkeitsmachung von Polymeren, die Triaromatmethaneinheiten als Grundbausteine aufweisen, so zu verbessern, daß nachträgliche naßchemische Reinigungen des dotierten Polymers vollständig entfallen.

Die Aufgabe wird erfindungsgemäß durch die kennzeichnenden Merkmale des Patentanspruches 1 gelöst.

Erfindungsgemäß wird das vor der Dotierung pulverisierte Polymer mit einem ebenfalls pulverisierten Nichtmetall der VI. Hauptgruppe des chemischen Periodensystems vermischt. Anschließend wird diesem Gemisch während eines Zeitraums von 15 Min. die Säure eines Nichtmetalls der VI. Hauptgruppe des Periodensystems zugesetzt. Daraufhin wird dieses Gemisch auf eine Temperatur von 150° C erwärmt und für 1.5 h bei Atmosphärendruck auf dieser Temperatur gehalten. Im Anschluß hieran wird das Nichtmetall im Vakuum unter Beibehaltung einer Temperatur von 150°C während etwa 1 h aus dem dotierten Polymer entfernt. Als Nichtmetall wird pulverisierter Schwefel und als Säure eines Nichtmetalls Schwefelsäure verwendet.

Weitere erfindungswesentliche Merkmale sind in den Unteransprüchen gekennzeichnet.

Das Polymer selbst kann bei der Polykondensation mindestens eines aromatischen Aldehyds und wenigstens einer aromatischen Ringverbindung gebildet werden, die wenigstens eine funktionelle Gruppe aufweist, welche in der aromatischen Ringverbindung die Elektronendichte erhöht und damit den elektrophilen Angriff begünstigt.

Das Polymer kann insbesondere durch die Polykondensation von Bisphenol-A und 4-Dimethylaminobenzaldehyd gebildet werden. Ein synthetisches Polymer mit Triaromatmethaneinheiten als Grundbausteine läßt sich auch durch eine Polykondensation von Bisphenol-A und para-Anisaldehyd herstellen. Die Bildung eines solchen Polymers kann auch durch eine katalytische Reaktion erreicht werden, bei der mit zwei-und/oder drei Aromaten substituierte Methane zur Reaktion gebracht werden.

Erfindungsgemäß kann das synthetische Polymer, bei dem die spezifische elektrische Leitfähigkeit in einem Bereich von $2 \times 10^{-15}$ bis $3 \times 10^{-4}$ (Ohm x cm)$^{-1}$ bar ist, auch bei der Polykondensation mindestens eines aromatischen Aldehyds und wenigstens eines aromatischen Ringsystems gebildet werden, derart, daß in dem Ringsystem mindestens zwei H-Atome durch mindestens zwei funktionelle Gruppen ersetzt werden, durch welche die Elektronendichte an mindestens zwei Stellen im Ringsystem erhöht wird.

Das Polymer kann ebenfalls durch die Polykondensation eines aromatischen Aldehyds und mindestens eines Ringsystems gebildet werden, welches 2 OH-Gruppen aufweist. Anstelle eines Ringsystems mit 2 OH-Gruppen kann auch ein aromatisches Ringsystem verwendet werden, welches 2 SH-Gruppen aufweist. Das synthetische Polymer läßt sich auch bei der Polykondensation eines aromatischen Aldehyds und einer aromatischen Ringverbindung herstellen, welche 2 Aminogruppen enthält.

Anhand des nachfolgenden Beispiels wird die Herstellung des synthetischen Polymers mit einer spezifischen elektrischen Leitähigkeit von $10^{-5}$x(Ohm x cm)$^{-1}$ beschrieben, wobei das für die Polykondensation verwendete Basismaterial aus Benzaldehyd und Resorcin gebildet wird.

Für die Herstellung einer kleineren Menge des dotierten Polymers werden beispielsweise 1000g des undotierten Polymers sehr fein pulverisiert. Das gleiche erfolgt mit 300g Schwefel. Das Gemisch wird in ein 6l Reaktionsgefäß gegeben, welches einen Schliffaufsatz für Kühler, Therometer und Rührer aufweist. Im Verlauf von 15 Min. werden dem Gemisch 400g Schwefelsäure unter Rühren zugegeben. Das Gemisch wird anschließend auf 150°C erwärmt. Diese Temperatur wird für 1.5 h bei Atmosphärendruck beibehalten. Im Anschluß daran wird der Reaktionbehälter unter Beibehaltung der obigen Temperatur evakuiert. Dabei wird der Schwefel aus dem dotierten Polymer entfernt. Hierfür wird etwa 1 h benötigt. Das dunkelbraune Reaktionsgemisch, insbesondere das dotierte Polymer, wird mechanisch aus dem Reaktionsgefäß entfernt. Est befindet sich in einem festen Zustand. Es kann aber bei einer Temperatur von 125°C wieder geschmolzen werden. Seine spezifische elektrische Leitfähigkeit beträgt $10^{-5}$-(Ohmx cm)$^{-1}$.

## Ansprüche

1. Verfahren zur Herstellung eines Polymers mit Triaromatmethaneinheiten als Grundbausteine, dessen elektrische Leitfähigkeit durch die Bildung von Charge-Transfer-Komplexen erzielt wird, dadurch gekennzeichnet, daß eine definierte Menge des pulverisierten Polymers mit einer definierten Menge eines pulverisierten Nichtmetalls gemischt und diesem Gemisch wärend eines vorgebaren Zeitraums die Säure eines Nichtmetallls zugesetzt wird, daß dieses Gemisch anschließend bei Atmosphärendruck auf eine vorgebbare Temperatur erwärmt und über einen definierten Zeitraum auf dieser gehalten wird, und daß daraufhin während eines definierten Zeitraums ein Vakuum unter Beibehaltung der obigen Temperatur erzeugt und dabei das Nichtmetall aus dem Polymer entfernt wird.

2. Verfahren nach Anspruch 1, dadurch gekennzeichnet, daß dem Polymer ein Nichtmetall der VI. Hauptgruppe des Periodensystems als Lösungsmittel und die Säure eines Nichtmetalls der VI. Hauptgruppe des Periodensystems als Elektronenakzeptor begemischt werden.

3. Vefahren nach einem der Ansprüche 1 oder 2, dadurch gekennzeichnet, daß dem Polymer pulverisierter Schwefel und über einen Zeitraum von 15 Min. Schwefelsäure begemischt werden, und daß dieses Gemisch unter Atmosphärendruck auf eine Temperatur von 150°C erwärmt und für 1.5 h auf dieser Temperatur gehalten wird.

4. Verfahren nach einem der Ansprüche 1 bis 3, dadurch gekennzeichnet, daß das dotierte Polymer zur Entfernung des Nichtmetalls unter Beibehaltung einer Temperatur von 150°C für wenigstens 1 h einem Vakuum ausgesetzt wird.

5. Verfahren nach einem der Ansprüche 1 bis 5, dadurch gekennzeichnet, daß dem Polymer 30 Gew.% des Nichtmetalls und 40 Gew% einer Säure dieses Nichtmetalls bezogen auf das Gesamtgewicht des Polymers beigemischt werden.

6. Verfahren nach einem der Ansprüche 1 bis 5 dadurch gekenzeichnet, daß 1000g des pulverisierten Polymers mit 300g pulverisiertem Schwefel gemischt und 400g Schwefelsäure während eines Zeitraums von 15 Min. zugestzt werden, daß dieses Gemisch anschließend auf 150°C erwärmt und für 1.5 h unter Atmosphärendruck auf dieser Temperatur gehalten wird, und daß daraufhin unter Beibehaltung der Teperatur von 150°C während wenigstens 1 h das Nichtmetall im Vakuum aus dem Polymer entfernt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | EP-A-0 112 522 (BROWN, BOVERI & CIE AG) <br> * Anspruch 1 * <br><br> --- | 1 | C 08 G 8/04 <br> C 08 G 8/28 <br> C 08 G 16/02 <br> C 08 G 16/04 <br> H 01 B 1/12 |
| A | EP-A-0 084 642 (BROWN, BOVERI & CIE AG) <br> * Anspruch 1 * <br><br> --- | 1 | |
| A | PATENT ABSTRACTS OF JAPAN, Band 7, Nr. 61 (C-156)[1206], 15. März 1983; & JP - A - 57 209 953 (MITSUI TOATSU KAGAKU K.K.) 23.12.1982 <br><br> --- | 1 | |
| A | US-A-4 456 548 (D. LEWIS et al.) <br> * Ansprüche 1,2 * <br><br> --- | 1 | RECHERCHIERTE SACHGEBIETE (Int. Cl. 4) |
| A | US-A-4 390 664 (K. KANAYAMA) <br> * Spalte 2, Zeilen 44-54, Strukturformel * <br><br> ----- | 1 | C 08 G 8/00 <br> C 08 G 12/00 <br> C 08 G 16/00 <br> C 08 G 61/00 <br> C 08 K 3/00 <br> H 01 B 1/12 |

Der vorliegende Recherchenbericht wurde für alle Patentansprüche erstellt.

| Recherchenort | Abschlußdatum der Recherche | Prüfer |
|---|---|---|
| BERLIN | 07-01-1987 | HASS C V F |